(19)

Europäisches
Patentamt
European
Patent Office
Office européen
des brevets

(11) **EP 3 760 423 A1**

(12) **EUROPEAN PATENT APPLICATION**

(43) Date of publication:
06.01.2021 Bulletin 2021/01

(51) Int Cl.:
**B29D 11/00** (2006.01)    **B29C 45/14** (2006.01)

(21) Application number: **19315054.7**

(22) Date of filing: **02.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ESSILOR INTERNATIONAL
94220 Charenton-Le-Pont (FR)**

(72) Inventors:
• **CHIU, Hao-Wen
  Dallas TX, Texas 75235 (US)**
• **JALLOULI, Aref
  Dallas TX, Texas 75235 (US)**
• **SHAN, Haifeng
  Dallas TX, Texas 75235 (US)**

(74) Representative: **Jacobacci Coralis Harle
32, rue de l'Arcade
75008 Paris (FR)**

(54) **METHOD FOR MAKING OPTICAL LENSES USING 3D PRINTED FUNCTIONAL WAFERS**

(57)    Disclosed herein is an injection molding method for making optical thermoplastic lenses using 3D-printed functional wafers. The wafer and base lens are made of different materials having dissimilar glass transition temperatures.

EP 3 760 423 A1

**Description**

**FIELD OF THE INVENTION**

The present invention generally relates to additive manufacturing and injection molding methods for the production of optical articles.

**BACKGROUND**

Fused Deposition Modeling (FDM, sometimes referred to as Fused Filament Fabrication or FFF) is the most widely used 3D printing technology for producing thermoplastic parts. A FDM 3D printer builds parts by extruding a thermoplastic filament through a heated nozzle. The printer continuously moves the nozzle around, depositing melted material at pre-determined locations layer-by-layer.

One major disadvantage of FDM 3D printing is its inability to manufacture parts at a resolution that is high enough for parts of optical quality. The FDM layering method involves the repeated application or build-up of multiple voxels of polymer filament material. The step-wise build-up process results in numerous multiple edges or small holes on the surface of the manufactured part. Each of the numerous edges provides an area through which light may be scattered. The net result is a manufactured part with a rough surface and non-transparent appearance that scatters transmitted light significantly.

Another disadvantage of FDM 3D printing is that manufactured parts often exhibit poor mechanical strength. Voxels of polymer filament material are laid down adjacent to each other. The voxels weld to one another along their periphery to form a solid part. Poor inter-diffusion between adjacent voxels leads to poor inter-strand adhesion. The net result of numerous deposited voxels of filament material is a manufactured part with poor mechanical strength and poor impact strength.

Because of the inherent disadvantages associated with FDM 3D-printed parts, current FDM methods are not satisfactory for manufacturing ophthalmic lenses or lens components. In order for FDM to become useful for the ophthalmics industry, manufactured part optical quality and mechanical strength must be improved upon.

Wafers are thin polymeric films that can be applied on a lens surface in order to bestow the lens with some type of functionality. Examples of wafer functionalities include color enhancement, transmittance reduction of desired wavelengths of light, and photochromicity. One method for manufacturing thermoplastic lenses with surface-bound functional wafers is injection over-molding. In an injection over-molding process, a functional wafer is provided in a lens molding cavity and the cavity is subsequently filled with molten lens material. Because of their poor optical quality and mechanical strength, FDM 3D-printed wafers are not ideal candidates for injection over-molding.

**SUMMARY**

The inventors have examined numerous methods for incorporating FDM 3D printing into ophthalmic lens manufacturing methods. The inventors have found that selecting a wafer material having a glass transition temperature (Tg) that is at at or between about 100 °C below the base lens material Tg to at or about 15 °C below the base lens material Tg resolves the poor optical quality and mechanical strength issues associated with FDM 3D printed wafers. The selection of a wafer material Tg that is at or between about 100 °C below the base lens material Tg to at or about 15 °C below the base lens material Tg ensures that the wafer material softens enough to undergo viscoelastic deformation during injection molding. Wafer viscoelastic deformation reduces surface roughness of the wafer's coarse, light scattering surface. Viscoelastic deformation increases inter-diffusion of adjacently-deposited filament strand. This increases inter-strand adhesion, as well as adhesion to the injected lens material.

Some aspects of the disclosure are directed to a method for producing an optical article by over-molding an additive manufactured functional wafer onto a convex surface of a base lens to produce an ophthalmic lens. In some aspects, the method is as defined in the claims. In some embodiments, the additive manufactured functional wafer is a 3D-printed wafer of non-optical quality having a surface roughness greater than 50 nm RMS. The over-molding process is performed using an injection molding apparatus, and includes the steps of affixing the functional wafer to the concave surface of a mold cavity of a molding apparatus and filling the mold cavity with molten base lens material. In some embodiments, the wafer material has a glass transition temperature ($T_{g,wafer}$) at or between about 100 °C below the glass transition temperature of the base lens material ($T_{g,\,lens}$) to at or about 15 °C below the glass transition temperature of the base lens material.

$$T_{g,lens} - 100\,°C \leq T_{g,wafer} \leq T_{g,lens} - 15\,°C \text{(I)}$$

In some aspects, the over-molding is performed at a cavity temperature ($T_{cavity}$) that is within 10 °C of Tg,wafer and preferably within 5 °C of Tg,wafer.

$$T_{g,wafer} - 10\,°C \leq T_{cavity} \leq T_{g,wafer} + 10\,°C \quad (II)$$

$$T_{g,wafer} - 5\,°C \leq T_{cavity} \leq T_{g,wafer} + 5\,°C \quad (III)$$

In some embodiments, the injection molding apparatus molding cavity is heated to a constant temperature prior to providing the mold with the molten base lens material. The over-molding apparatus may include steel or glass mold inserts.

A 3D-printed wafer of non-optical quality can be used when performing the over-molding process within the constraints given above. In some aspects of the over-molding process, the functional wafer is visoelastically deformed. Viscoelastic deformation deforms the functional wafer and reduces the surface roughness of the functional wafer convex surface, in some embodiments. In some aspects, viscoelastic deformation templates the texture of the concave surface of the mold cavity onto the convex surface of the functional wafer. In some aspects, the templating produces an ophthalmic lens with an optically smooth convex surface having a roughness less than 20 nm RMS, preferably less than 17 nm RMS. Heat and pressure provided by the injection molding apparatus and the molten lens material transfer or template the smooth lens material convex surface onto the waver concave surface. In some embodiments, the functional wafer includes at least one UV cut, blue cut, color enhancement, near infra-red cut, chronocut, and/or photochromicity dye or filter

In some embodiments, the functional wafer material is selected from the group consisting of polyamides, polyesters, polyester alloys, polyethylenes, polyethylene terephtalate, polysiloxanes, polyimides, polyurethanes, polypropylenes, polyetheretherketones, polyetherarylketones, perfluoroalkoxys, polychloro-trifluoroethylenes, polyolefins such as cyclo-olefin polymers, polyacrylics, polyacrylates such as polymethylmethacrylate (PMMA), poly(meth)acrylate, polyethyl(meth)acrylate, polybutyl(meth)acrylate, and polyisobutyl(meth)acrylate, polythiourethanes, polycarbonates (PC), ali-cyclic polycarbonates, polyallylics, polyphenylene sulfides, polyvinyls, polyarylenes, polyoxides, polysulfones, fluorinated ethylene propylenes, polytetrafluoroethylenes, ethylene-tetrafluoroethylenes, polyvinylidene fluorides, ethylene-chlorortifluoroethylenes, polystyrenes, polyacrylonitriles, styrene copolymers such as styrene acrylonitrile, styrene methyl methacrylate, styrene butadiene methyl methacrylate, acrylonitrile butadiene styrene, methyl methacrylate acrylonitrile butadiene styrene, and styrene maleic anhydride, polyimides, polyetherimides, polypentenes, cellulose triacetate, copolymers thereof, and combinations thereof. Suitable polyamides include aliphatic nylon polyamides, such as nylon 6, nylon 6-6, nylon 6-10, nylon 6-12, nylon 10, nylon 10-10, nylon 11, nylon 12, a copolymer thereof, or a derivative or mixture thereof.

In some embodiments, the functional wafer material and the base lens material are selected to be compatible with eath other. Thermoplastic materials that inter-diffuse into one another in the molten state are said to exhibit compatibility or to be compatible with each other. Examples of such wafer/lens pairs include but not limited to PMMA/PC, Copolyester/PC, polyester alloy/PC, and ali-cyclic polycarbonate/PC.

Some aspects of the disclosure are directed to an optical article that includes an ophthalmic lens. In some aspects, the optical article is as defined in the claims. The ophthalmic lens comprises a base lens and an additive-manufactured functional wafer affixed to the convex side of the base lens. In some embodiments, the ophthalmic lens is produced by injection over-molding a molten base lens material over the additive-manufactured functional wafer. In some aspects, the additive-manufactured functional wafer material has a glass transition temperature that is at or between about 100 °C below the glass transition temperature of the base lens material to at or about 15 °C below the glass transition temperature of the base lens material.

"Ophthalmic lens," according to the disclosure, is defined as a lens adapted, namely for mounting in eyeglasses, whose function is to protect the eye and/or to correct vision. This lens can be an afocal, unifocal, bifocal, trifocal, or progressive lens. The ophthalmic lens may be corrective or un-corrective. Eyeglasses wherein ophthalmic lenses will be mounted could be either a traditional frame comprising two distinctive ophthalmic lenses, one for the right eye and one for the left eye, or like mask, visor, helmet sight or goggle, wherein one ophthalmic lens faces simultaneously the right and the left eyes. Ophthalmic lenses may be produced with traditional geometry as a circle or may be produced to be fitted to an intended frame.

Any embodiment of any of the disclosed compositions and/or methods can consist of or consist essentially of- rather than comprise/include/contain/have-any of the described elements and/or features and/or steps. Thus, in any of the claims, the term "consisting of' or "consisting essentially of' can be substituted for any of the open-ended linking verbs recited above, in order to change the scope of a given claim from what it would otherwise be using the open-ended linking verb.

The term "substantially" and its variations are defined as being largely but not necessarily wholly what is specified as understood by one of ordinary skill in the art, and in one non-limiting embodiment substantially refers to ranges within 10%, within 5%, within 1%, or within 0.5%. The term "about" or "approximately" or "substantially unchanged" are defined as being close to as understood by one of ordinary skill in the art, and in one non-limiting embodiment the terms are defined to be within 10%, preferably within 5%, more preferably within 1%, and most preferably within 0.5%.

The use of the word "a" or "an" when used in conjunction with the term "comprising" in the claims and/or the specification may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. With respect to the transitional phase "consisting essentially of," in one non-limiting aspect, a basic and novel characteristic of the compositions and methods disclosed in this specification includes a method for injection overmolding a 3D-printed functional wafer onto a base ophthalmic lens.

Other objects, features and advantages of the present invention will become apparent from the following detailed description. It should be understood, however, that the detailed description and the examples, while indicating specific embodiments of the invention, are given by way of illustration only. Additionally, it is contemplated that changes and modifications within the spirit and scope of the invention will become apparent to those skilled in the art from this detailed description.

## BRIEF DESCRIPTION OF THE FIGURES

FIG. 1 is a schematic of an FDM 3D printer.

FIG. 2 is an illustration that represents an FDM 3D-printed functional wafer. The wafer has a rough, light-scattering surface that inherently results from the FDM 3D-printing process.

FIG. 3 is a schematic illustrating an injection over-molding process. The process incorporates a functional wafer onto the convex surface of an injection-molded ophthalmic lens.

## DETAILED DESCRIPTION

Various features and advantageous details are explained more fully with reference to the non-limiting embodiments that are illustrated in the accompanying drawings and detailed in the following description. It should be understood, however, that the detailed description and the specific examples, while indicating embodiments, are given by way of illustration only, and not by way of limitation. Various substitutions, modifications, additions, and/or rearrangements will be apparent to those of ordinary skill in the art from this disclosure.

In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

A wafer is defined as a structure that possesses particular desired optical attributes, e.g., selective light transmittance, reflectance or absorbance, polarization properties, color, photochromism, electrochromism, and the like. The wafer structure is produced by an additive manufacturing process. The process involves deposition of multiple filament voxels adhered, or otherwise secured, to each other. An optically smooth surface refers to a transparent object surface that has a roughness of less than 20 nm RMS, preferably less than 17 nm RMS. Non-optical quality refers to a transparent object having a surface roughness that is greater than 50 nm RMS.

As used herein, "voxel" means a volume element. A voxel is a distinguishable, geometric shape which is part of a three-dimensional space. The diameter, width, or thickness of a voxel is typically in the range of 0.1 to 500 $\mu$m. A voxel includes elongated shapes, such as strands, therefore, the length of a voxel does not necessarily include an upper limit. A voxel length can be 0.1 $\mu$m, 100 $\mu$m, 0.1 cm, 100 cm, greater than 100 cm, or any length therebetween. "Voxel" can refer to an individual element which, in combination with other voxels, can define a line or a layer or other predetermined shape or pattern within the three-dimensional space. Constituted voxels can be any desired shape, depending on the technology and manufacturing process conditions used. A plurality or collection of adjacent voxels, when arranged, can create or define a line or layer and can constitute an optical element. A particular voxel may be identified by x, y, and z coordinates of a selected point of geometry of the shape, such as a corner, center, or by other means known in the art. The boundary of a voxel is defined by the outer surface of the voxel. Such boundaries may be in close proximity to, with or without contacting.

As used herein, "Additive Manufacturing" means manufacturing technology as defined in the international standard ASTM 2792-12, describing a process of joining materials to make 3-D solid objects from a 3-D digital model. The process is referred to as "3-D printing" or "materials printing" since successive layers are laid down atop one another. Printing materials include liquids, powders, filaments, and sheet materials, from which series of cross-sectional layers are built. The layers, which correspond to the virtual cross sections from the CAD model, are joined or automatically fused to create the solid 3-D object. Additive Manufacturing includes, but is not limited to, manufacturing methods such as stereolithography, mask stereolithography, mask projection stereolithography, polymer jetting, scanning laser sintering (SLS), scanning laser melting (SLM), and fused deposition modelling (FDM). Additive Manufacturing technologies comprise processes which create 3-D solid objects by juxtaposition of volume elements or particles according to a pre-determined arrangement, typically defined in a CAD (Computer Aided Design) file. Juxtaposition is understood as sequential operations including building one material layer on top of a previously built material layer, and/or positioning a material volume element next to a previously deposited material volume element. The term "part" refers to any part built using a layer-based additive manufacturing technique, and includes 3D parts and support structures built using layer-based additive manufacturing techniques. An exemplary part disclosed herein is a functional wafer.

The term "polymer" refers to a polymeric material having one or more monomer species, including homopolymers, copolymers, terpolymers, and the like. As used herein, "thermoplastic" is understood to be a polymer resin that can melt when exposed to heat, and preferably is optically clear and of optical grade.

As used herein, "inter-diffuse," and derivatives, means movement of at least a molecule, portion of a molecule, or portion of a polymer chain, from the space occupied by one voxel into the space occupied by a juxtaposed, physically contacting, voxel. Inter-diffusion can occur spontaneously or be induced by mechanical, physical, or chemical treatment. For example, a mechanical treatment includes agitation, such as by exposure to ultra-sonic energy, high-frequency vibratory device, etc., which promote mixing at the voxel boundaries. Macro-diffusion is a mechanical method wherein the voxels are blended or "smeared" by table vibrations, especially where such vibrations occur at the time of deposition, resulting in intimate voxel-to-voxel contact. An exemplary physical treatment includes a thermal treatment by exposure to heat, infra-red, microwave, etc., radiation. A thermal treatment increases temperature above the glass-liquid transition point (Tg) of the high viscosity domain in the voxels and promotes inter-diffusion. An exemplary chemical treatment includes a chemical reaction between reactive species of composition. The molecular mass of the polymers present in the voxels can be reduced, such as by two-pathway chemistries or reversible reactions, to promote inter-diffusion.

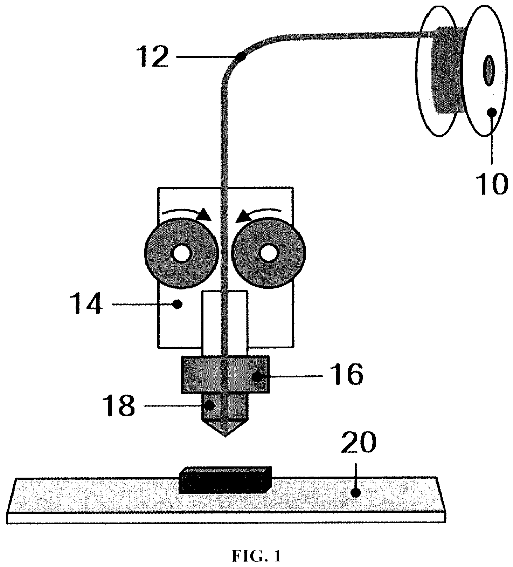

FDM is one of the most cost-effective methods for producing custom thermoplastic parts and prototypes. An FDM 3D printer (**FIG. 1**) builds parts by extruding a thermoplastic filament through a heated nozzle. Generally, the filament **12** is fed to extruder **14**, which includes heater block **16** and heated nozzle **18**. The melted filament is delivered through the heated nozzle **18** onto a printing bed **20**. The melted filament is applied on the X-Y plane to produce the first layer. Once first layer is complete, the platform is lowered along the Z-axis direction and a second layer is then printed. The above steps are repeated till the part is manufactured. The hot strands weld to one another to form a solid part. One major disadvantage of FDM 3D printing is its inability to produce fine resolution parts of optical quality. The FDM layering method results in many light-scattering edges and poor inter-filament diffusion and adhesion.

Opportunities do exist, howver, for FDM applications in the ophthalmic lens industry. Because 3D printing is more cost-effective for small volumes and quick prototyping tasks, FDM can be used to produce functional wafers from a thermoplastic filament having specific dyes and/or filters. Examples include UV cut, blue cut, NIR cut, color enhancement, chronocut, and photochromic filters. The resulting functional wafer can then be integrated onto the front surface of an ophthalmic lens by injection over-molding process (or film insert molding process).

Conventional injection over-molding process were examined, however, these failed to produce lenses of optical quality despite the high heat and pressure provided by the injection molding apparatus. In a conventional injection over-molding process, the entire injection over-molding cycle takes place at a constant cavity temperature ($T_{cavity}$) that is substantially lower than the glass transition temperature of the wafer material ($T_{g, wafer}$).

The glass transition temperature characterizes a second order transition of amorphous polymers from brittle, glassy solids to viscous or rubber-like substances. $T_{cavity}$ must be lower than $T_{g, wafer}$ so that the functional wafer holds its shape when being inserted into the cavity. Further, $T_{cavity}$ must be lower than the glass transition temperature of the lens material ($T_{g, lens}$) so the resulting lens is in a solid form that is rigid enough to be ejected without deformation. Most commonly, $T_{cavity} \leq T_{g, lens}$ - 20 °C. The wafer and the lens are typically made of the same material in order to provide compatibility between the wafer and the lens for good bonding. In this case, $T_{g, wafer} = T_{g, lens}$.

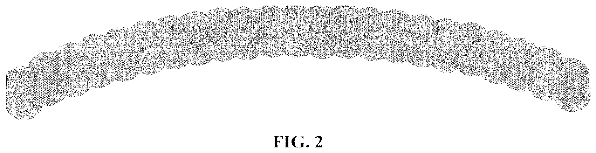

One reason conventional injection over-molding processes are not able to produce lenses of optical quality using 3D-printed functional wafers is because the convex surface of the wafer is kept at a temperature well below its Tg. The convex surface remains solid throughout the injection over-molding process and retains the surface ridges resulting from voxel deposition (**Fig. 2**). This problem can be overcome by selecting a wafer material having a glass transition temperature ($T_{g, wafer}$) at or between about 100 °C below the glass transition temperature of the lens material ($T_{g, lens}$) to at or about 15 °C below the glass transition temperature of the base lens material, *i.e.*, $T_{g, lens}$ - 40 °C ≤ $T_{g, wafer}$ ≤ $T_{g, lens}$ - 15 °C. The wafer glass transition temperature can be about 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 60, 70, 80, 90, or 100 °C below the glass transition temperature of the base lens material, or any temperature therebetween. Within this temperature range, the wafer material is able to undergo viscoelastic deformation under the high heat and high injection pressure. The wafer concave surface is melted by the molten lens material being forced against it. Total contacting surface area between the wafer and base lens material is increased, wafer material and lens material inter-diffuse into each other on a microscopic level at the surface interface, and adhesion between the wafer and base lens material is increased. The wafer convex surface undergoes viscoelastic deformation under the high heat and high injection pressure to replicate the surface of the concave insert. Finally, adjacent voxels within the wafer inter-diffuse into one another to improve intra-voxel adhesion and overall mechanical strength. A lens manufactured according to the criteria set forth above has an optically smooth front surface, with the wafer's original surface roughness having been reduced.

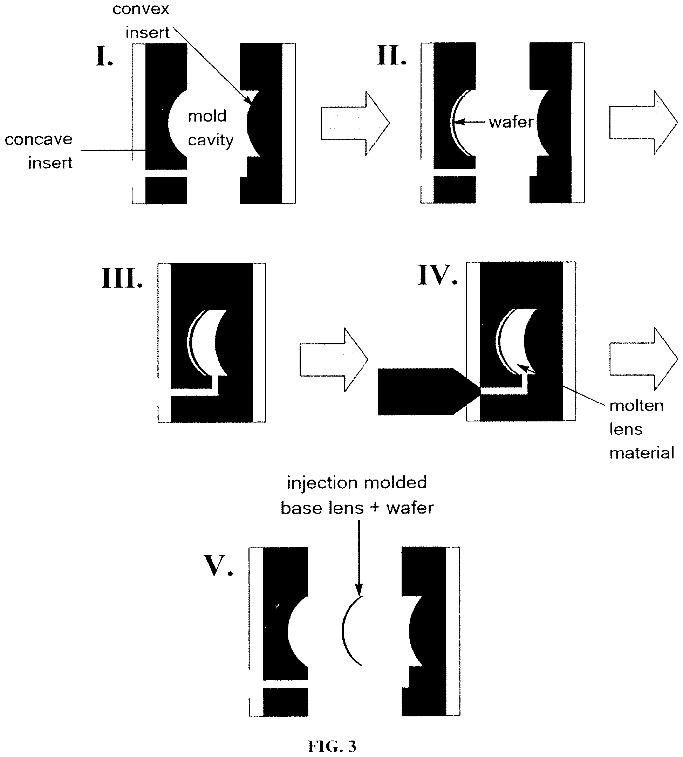

Referring to **Fig. 3**, the injection molding apparatus includes two mold halves and two opposite facing inserts. The concave and convex insert each reside in a mold half, forming a cavity. In some embodiments, the cavity temperature $T_{cavity}$ is maintained at a constant temperature within 10 °C of $T_{g, wafer}$ through the entire process. A constant mold temperature method benefits from a shorter production cycle time and employs a mold design that is less complex than molds used in heat/cool processes.

In step I, the mold is opened to provide access to the insert surfaces. In step II, a functional wafer is inserted. The wafer is affixed to the concave insert surface. In step III, the two mold halves are joined to close the mold and form the injection molding cavity. The cavity space is a template that represents the shape of the lens to be molded. In step IV, molten lens material is injected into the mold cavity, and the molten lens material becomes fuse-bonded to the wafer. In step V, the mold halves are separated and the lens is ejected.

**EXAMPLES**

**Example 1**

Base lens material 1 - A UV-stabilized polycarbonate (Sabic Lexan® OQ3820) was employed as the base lens material. This PC resin has a glass transition temperature of 150 °C and a UV-cut at about 380 nm, as measured through a 2 mm thick lens.

Functional wafer 1 - A high heat resistant PMMA wafer material (Evonik ACRYLITE® hw55) with a glass transition temperature of 120 °C and a UV-cut at about 325 nm, as measured through a 2 mm thick lens was compounded with 1.0% of a UV absorber (Tinuvin® 326) and extruded into 1.75 mm filaments. A 4-base piano wafer, 76mm in diameter and 1.0 mm in thickness, was FDM 3D-printed using the filaments.

Functional wafer 1 was applied onto base lens material 1 employing the key parameters listed in Table 1 below.

**Table 1**

| | |
|---|---|
| Concave insert | Steel, 76 mm, and R132.5 mm |
| Convex insert | Steel, 76 mm, and R88.3 mm |
| Lens material | Base lens material 1 (PC) |
| Wafer material | Functional wafer 1 material (PMMA + UV absorber) |
| FDM printed wafer geometry | 4-base, 76 mm, R132.5 mm, thickness 1 mm |
| $T_{g, lens}$ | 150 °C |
| $T_{g, wafer}$ | 120 °C |
| Melt temperature ($T_{melt}$) | 260 °C |
| $T_{cavity}$ | 120 °C |

The resulting semi-finished (SF) lens, 10 mm in thickness, was optically transparent with a smooth front surface and exhibited a UV-cut at about 402 nm after surfacing to 2 mm plano. In addition, the blue cut performance BVC B' was measured to be about 30%.

### Example 2

Functional wafer 2 - A copolyester resin (SK Chemical Ecozen® T110) with a glass transition temperature of 110 °C and a UV-cut at about 320 nm as measured through a 2mm thick lens was compounded with 1.0% of a UV absorber (Tinuvin® 326) and extruded into 1.75mm filaments. A 4-base piano wafer, 76 mm in diameter and 1.0 mm in thickness, was FDM 3D-printed using the filaments.

The resulting wafer was non-transparent with a rough surface. To produce an ophthalmic lens having a UV-cut above 400 nm while providing blue light protection, functional wafer 2 was applied to base lens material 1 using the key parameters listed in Table 2 below.

**Table 2**

| Concave insert | Steel, 76 mm, and R132.5 mm |
|---|---|
| Convex insert | Steel, 76 mm, and R88.3 mm |
| Lens material | Base lens material 1 (PC) |
| Wafer material | Functional wafer 2 material (copolyester + UV resin) |
| FDM printed wafer geometry | 4-base, 76 mm, R132.5 mm, thickness 1 mm |
| $T_{g, lens}$ | 150 °C |
| $T_{g, wafer}$ | 110 °C |
| Melt temperature ($T_{melt}$) | 260 °C |
| $T_{cavity}$ | 110 °C |

The resulting 10 mm thick SF lens was optically transparent with a smooth front surface and exhibited a UV-cut at about 402 nm after surfacing to 2 mm plano. The blue cut performance BVC B' was measured to be about 30%.

In the methods disclosed herein, the functional wafer material has a glass transition temperature at or between 100 °C below the glass transition temperature of the base lens material to at or about 15 °C below the glass transition temperature of the base lens material. Because of this difference, the heat provided by the mold cavity and the molten lens material, as well as the pressure provided by the injection molding apparatus, cause viscoelastic deformation of the wafer. The smooth surface of the concave insert is transferred to the convex surface of the viscoelastically deforming wafer, thereby reducing its surface roughness. The pressurized, molten lens material melts the concave surface of the wafer creating an optically transparent interface through fuse-bonding. In this way, a 3D-printed wafer may be used in an injection over-molding process because its initially rough surfaces are smoothened during the molding process.

The claims are not to be interpreted as including means-plus- or step-plus-function limitations, unless such a limitation is explicitly recited in a given claim using the phrase(s) "means for" or "step for," respectively.

### Claims

1. A method for producing an optical article, the method comprising over-molding an additive manufactured functional wafer onto a convex surface of a base lens to produce an ophthalmic lens, wherein the over-molding comprises:

   affixing the functional wafer to the concave surface of a mold cavity of a molding apparatus; and
   filling the mold cavity with molten base lens material;

   wherein the functional wafer material has a glass transition temperature at or between at least 100 °C below the glass transition temperature of the base lens material to at or about 15 °C below the glass transition temperature of the base lens material.

2. The method of claim 1, wherein the additive manufactured functional wafer is a wafer of non-optical quality having a surface roughness greater than 50 nm RMS.

3. The method of claim 1, wherein the over-molding visoelastically deforms the functional wafer.

**4.** The method of claim 3, wherein the viscoelastic deformation templates the texture of the concave surface of the mold cavity onto the convex surface of the functional wafer.

**5.** The method of claim 4, wherein the templating produces an ophthalmic lens with an optically smooth convex surface having a roughness less than 20 nm RMS.

**6.** The method of claim 1, wherein the functional wafer includes at least one UV cut, blue cut, color enhancement, near infra-red cut, chronocut, and/or photochromicity dye or filter.

**7.** The method of claim 1, wherein the functional wafer material is selected from the group consisting of polyamides, polyesters, polyester alloys, polyethylenes, polyethylene terephtalate, polysiloxanes, polyimides, polyurethanes, polypropylenes, polyetheretherketones, polyetherarylketones, perfluoroalkoxys, polychloro-trifluoroethylenes, polyolefins such as cyclo-olefin polymers, polyacrylics, polyacrylates such as polymethylmethacrylate (PMMA), poly(meth)acrylate, polyethyl(meth)acrylate, polybutyl(meth)acrylate, and polyisobutyl(meth)acrylate, polythiourethanes, polycarbonates (PC), ali-cyclic polycarbonates, polyallylics, polyphenylene sulfides, polyvinyls, polyarylenes, polyoxides, polysulfones, fluorinated ethylene propylenes, polytetrafluoroethylenes, ethylene-tetrafluoroethylenes, polyvinylidene fluorides, and ethylene-chlorortifluoroethylenes, polystyrenes, polyacrylonitriles, styrene copolymers such as styrene acrylonitrile, styrene methyl methacrylate, styrene butadiene methyl methacrylate, acrylonitrile butadiene styrene, methyl methacrylate acrylonitrile butadiene styrene, and styrene maleic anhydride, polyimides, polyetherimides, polypentenes, cellulose triacetate,, and copolymers, derivatives, and mixtures thereof.

**8.** The method of claim 1, further comprising heating the molding cavity to a constant temperature prior to providing the mold with the molten base lens material.

**9.** The method of claim 1, wherein the molding apparatus comprises steel or glass mold inserts.

**10.** An optical article comprising an ophthalmic lens, said ophthalmic lens comprising a base lens and an additive-manufactured functional wafer affixed to the convex side of the base lens, wherein the ophthalmic lens is produced by injection over-molding a molten base lens material over the additive-manufactured functional wafer.

**11.** The optical article of claim 10, wherein an additive-manufactured functional wafer material has a glass transition temperature at or between at least 100 °C below the glass transition temperature of the base lens material to at or about 15 °C below the glass transition temperature of the base lens material.

**12.** The optical article of claim 10, wherein the functional wafer includes at least one UV cut, blue cut, color enhancement, near infra-red cut, chronocut, and/or photochromicity dye or filter.

**13.** The optical article of claim 10, wherein the functional wafer material is selected from the group consisting of polyamides, polyesters, polyester alloys, polyethylenes, polyethylene terephtalate, polysiloxanes, polyimides, polyurethanes, polypropylenes, polyetheretherketones, polyetherarylketones, perfluoroalkoxys, polychloro-trifluoroethylenes, polyolefins such as cyclo-olefin polymers, polyacrylics, polyacrylates such as polymethylmethacrylate (PMMA), poly(meth)acrylate, polyethyl(meth)acrylate, polybutyl(meth)acrylate, and polyisobutyl(meth)acrylate, polythiourethanes, polycarbonates (PC), ali-cyclic polycarbonates, polyallylics, polyphenylene sulfides, polyvinyls, polyarylenes, polyoxides, polysulfones, fluorinated ethylene propylenes, polytetrafluoroethylenes, ethylene-tetrafluoroethylenes, polyvinylidene fluorides, and ethylene-chlorortifluoroethylenes, polystyrenes, polyacrylonitriles, styrene copolymers such as styrene acrylonitrile, styrene methyl methacrylate, styrene butadiene methyl methacrylate, acrylonitrile butadiene styrene, methyl methacrylate acrylonitrile butadiene styrene, and styrene maleic anhydride, polyimides, polyetherimides, polypentenes, cellulose triacetate, and copolymers, derivatives, and mixtures thereof.

FIG. 1

FIG. 2

FIG. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 220 703 B1 (EVANS RUSSELL E [US] ET AL) 24 April 2001 (2001-04-24) * abstract * * figures 1-6 * * column 3, lines 25-45 * * column 7, lines 1-11,19-36 * ----- | 1-13 | INV. B29D11/00 B29C45/14 |
| X | EP 3 222 420 A1 (MITSUBISHI GAS CHEMICAL CO [JP]; MGC FILSHEET CO LTD [JP]) 27 September 2017 (2017-09-27) * abstract * * paragraphs [0057] - [0062], [0068] - [0078] * ----- | 1-13 | |
| X | US 2009/273756 A1 (VU HANNAH [US]) 5 November 2009 (2009-11-05) * abstract * * figures 1-2 * * paragraphs [0013] - [0023], [0046] - [0050] * ----- | 1-13 | |
| X A | US 2007/138664 A1 (CHEN XU [US] ET AL) 21 June 2007 (2007-06-21) * abstract * * paragraphs [0008] - [0014], [0029] - [0032], [0043] - [0046] * ----- | 10-13 1-9 | TECHNICAL FIELDS SEARCHED (IPC) B29D B29C B29L B29B |
| X A | EP 3 312 662 A1 (ZEISS CARL VISION INT GMBH [DE]) 25 April 2018 (2018-04-25) * abstract * * figures 1,2 * * paragraphs [0050] - [0053], [0090] - [0096] * ----- | 10-13 1-9 | |

The present search report has been drawn up for all claims

| Place of search | Date of completion of the search | Examiner |
|---|---|---|
| The Hague | 10 December 2019 | Heckmann, Paul |

EPO FORM 1503 03.82 (P04C01)

## ANNEX TO THE EUROPEAN SEARCH REPORT
## ON EUROPEAN PATENT APPLICATION NO.

EP 19 31 5054

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2019

| Patent document cited in search report | | Publication date | Patent family member(s) | | Publication date |
|---|---|---|---|---|---|
| US 6220703 | B1 | 24-04-2001 | AU | 2913001 A | 09-07-2001 |
| | | | EP | 1250622 A1 | 23-10-2002 |
| | | | JP | 2003518653 A | 10-06-2003 |
| | | | TW | 561099 B | 11-11-2003 |
| | | | US | 6220703 B1 | 24-04-2001 |
| | | | US | 6413641 B1 | 02-07-2002 |
| | | | US | 2001028436 A1 | 11-10-2001 |
| | | | WO | 0148539 A1 | 05-07-2001 |
| EP 3222420 | A1 | 27-09-2017 | CN | 107000415 A | 01-08-2017 |
| | | | EP | 3222420 A1 | 27-09-2017 |
| | | | JP | WO2016080445 A1 | 09-11-2017 |
| | | | KR | 20170086033 A | 25-07-2017 |
| | | | TW | 201637864 A | 01-11-2016 |
| | | | US | 2017322344 A1 | 09-11-2017 |
| | | | WO | 2016080445 A1 | 26-05-2016 |
| US 2009273756 | A1 | 05-11-2009 | US | 2004125335 A1 | 01-07-2004 |
| | | | US | 2006146278 A1 | 06-07-2006 |
| | | | US | 2009273756 A1 | 05-11-2009 |
| US 2007138664 | A1 | 21-06-2007 | AT | 478761 T | 15-09-2010 |
| | | | CN | 101326048 A | 17-12-2008 |
| | | | EP | 1963084 A2 | 03-09-2008 |
| | | | US | 2007138664 A1 | 21-06-2007 |
| | | | US | 2010065975 A1 | 18-03-2010 |
| | | | WO | 2007085908 A2 | 02-08-2007 |
| EP 3312662 | A1 | 25-04-2018 | CA | 3041171 A1 | 26-04-2018 |
| | | | CN | 109997069 A | 09-07-2019 |
| | | | EP | 3312662 A1 | 25-04-2018 |
| | | | EP | 3529658 A1 | 28-08-2019 |
| | | | KR | 20190086457 A | 22-07-2019 |
| | | | US | 2019243161 A1 | 08-08-2019 |
| | | | WO | 2018073398 A1 | 26-04-2018 |

EPO FORM P0459

For more details about this annex : see Official Journal of the European Patent Office, No. 12/82